# EUROPÄISCHE PATENTANMELDUNG

(11) **EP 1 936 178 A2**
(43) Veröffentlichungstag der Anmeldung: **25.06.2008**
(21) Anmeldenummer: 07023395.2
(22) Anmeldetag: 04.12.2007
(51) Int. Cl.: F02M 37/22

(54) **Kraftstoff-Vorwärmevorrichtung**

(30) Priorität: 22.12.2006 DE 102006060885
(71) Anmelder: Volkswagen Aktiengesellschaft, 38436 Wolfsburg (DE)
(72) Erfinder: Krabus, Olaf, 38542 Leiferde (DE)

(57) **Zusammenfassung**

Um an einer Kraftstoff-Vorwärmvorrichtung für einen Diesel-Verbrennungsmotor (1) mittels einfacher und kostengünstiger Maßnahmen sowohl eine Vorwärmung des Kraftstoffes zu gewährleisten als auch eine Erhöhung des Vorlauf- und Rücklaufdruckes über die vom Hersteller des Kraftstoff-Einspritzsystems (12) vorgegebenen Werte weitestgehend zu verhindern, wird im Wesentlichen vorgeschlagen, dass in ein Vorwärm- oder Kombiventil (15), welches sowohl in die Vorlaufleitung (5) als auch in die Rücklaufleitung (11) des Kraftstoff-Einspritzsystems (12) eingebunden ist, ein tankseitig die Vorlauf- und Rücklaufleitung (5, 11) verbindender Bypass (21) mit einem zur Rücklaufleitung (11) hin öffnenden Druckventil (22) integriert ist.

## Beschreibung

Die Erfindung betrifft eine Kraftstoff-Vorwärmvorrichtung nach dem Oberbegriff des Patentanspruchs 1.

Kraftstoff-Vorwärmvorrichtungen sind in den unterschiedlichsten Ausführungsformen hinlänglich bekannt. So ist es aus der DE 30 17 325 A1 bekannt, dass bei Diesel-Verbrennungsmotoren die Einspritzpumpen mit einem Überschuss an Dieselkraftstoff versorgt werden, der über eine Rücklaufleitung direkt zum Tank zurückgeleitet wird. Dieser Pumpenrücklauf dient dazu, den einzuspritzenden Dieselkraftstoff auf einer günstigen Temperatur zu halten sowie die Kühlung der Einspritzpumpe zu gewährleisten und dieselbe somit auf einer normalen Betriebstemperatur zu halten. Bei tiefen Betriebstemperaturen bildet Dieselkraftstoff Paraffinkristalle aus, die den Kraftstofffilter verstopfen können. Um dieses zu verhindern, wird mit dieser Druckschrift vorgeschlagen, den durch die Einspritzpumpe vorgewärmten Dieselkraftstoff auf die Eingangsseite des Kraftstofffilters zurückzuleiten, wodurch zum einen etwaige abgeschiedene Paraffine im Kraftstofffilter gelöst werden und zum anderen sich eine Verringerung des Durchsatzes an direkt aus dem Tank durch die Vorlaufleitung gepumpten Dieselkraftstoff ergibt, da lediglich die vom Diesel-Verbrennungsmotor verbrauchte Menge an Dieselkraftstoff dem Tank entnommen werden muss. Um bei hohen Temperaturen im Vorlauf eine zu starke Erwärmung der Einspritzpumpe, einhergehend mit einer Verringerung der Lebensdauer derselben, zu vermeiden, wird des Weiteren ein so genanntes Verteilerventil mit einem Thermostatelement in die Rücklaufleitung eingebunden, welches bei Temperaturen des Dieselkraftstoffes von 25 °C bis 30 °C derart schaltet, dass der rückgeführte Dieselkraftstoff dem Tank zugeführt wird, wogegen bei Temperaturen unter 25 °C der Pumpenrücklauf vollständig dem Kraftstofffilter zugeführt und weiter dem Vorlauf beigemischt wird. Des Weiteren wird vorgeschlagen, besagtes Thermostatelement durch ein Dehnstoffelement, vorliegend durch eine mit Wachs gefüllte Kapsel auszubilden, die sich bei Verflüssigung des Wachses unter Wärmeeinwirkung ausdehnt und einen Kolben zur Gewährleistung der oben erwähnten Schaltstellungen betätigt. Zur vorgenannten ähnlich gelagerte Lösungen sind ferner der DE 197 14 488 C1 und der DE 100 59 049 A1 zu entnehmen, wobei auch hier zur Kraftstoffvorwärmung ein Vorwärmventil eingesetzt wird, welches bei kalten Temperaturen eine Einspeisung von warmem Dieselkraftstoff aus dem Rücklauf in den Vorlauf gestattet. Dies wird, wie bereits oben dargetan, ebenfalls durch die Versperrung des Rücklaufes zum Tank mit einem Schaltelement respektive einem Ventil bewerkstelligt. Weiterhin wird mit der DE 103 22 197 A1 ein thermostatgesteuertes Regelventil, auch als Kombiventil bezeichnet, offenbart, welches zwischen einer Niederdruck-Kraftstoffpumpe und einer Hochdruck-Kraftstoffpumpe im Niederdrucksystem angeordnet ist und zum einen bedarfsgerecht die Kraftstoffzuführung vom Tank zum Motor sowie den Kraftstoffrücklauf steuert und zum anderen eine schnelle Erwärmung des Kraftstoffes in der Kaltstartphase des Motors und zum anderen bei warmem Motor eine Kühlung des rücklaufenden Kraftstoffes gewährleistet.

Im Rahmen von umfangreichen Versuchen wurde nunmehr gefunden, dass bei all den vorstehenden Lösungen in Kombination mit einer innerhalb des Kraftstofftanks angeordneten Kraftstoffpumpe sich im Betriebspunkt der Kaltstartphase der vorgenannten Ventile sich der Vorlauf- und/oder Rücklaufdruck am Einspritzsystem erhöht. Die Einhaltung der vom Hersteller des Einspritzsystems vorgegebenen Druckwerte ist für die einwandfreie Funktion des Einspritzsystems jedoch zwingend erforderlich.

Hiervon ausgehend ist es Aufgabe der Erfindung, eine verbesserte Kraftstoff-Vorwärmvorrichtungen der gattungsgemäßen Art zu schaffen, welche mittels einfacher und kostengünstiger Maßnahmen sowohl eine Vorwärmung des Kraftstoffes gestattet als auch eine Erhöhung des Vorlauf- und/oder Rücklaufdruckes über die vom Hersteller des Einspritzsystems vorgegebenen Werte weitestgehend verhindert.

Ausgehend von einer Kraftstoff-Vorwärmvorrichtung für einen Diesel-Verbrennungsmotor mit einer in einem Tank angeordneten Kraftstoffpumpe, die ihrerseits den Kraftstoff über eine Vorlaufleitung mit Kraftstofffilter zu einer ein Einspritzsystem des Diesel-Verbrennungsmotors mit Kraftstoff versorgenden Hochdruck-Kraftstoffpumpe fördert, wobei überschüssiger Kraftstoff, vom Einspritzsystem kommend, über eine Rücklaufleitung zum Tank rückführbar ist, und wobei ein Vorwärm- oder Kombiventil vorgesehen ist, welches sowohl in die Vorlaufleitung als auch in die Rücklaufleitung eingebunden und derart schaltbar ist, dass in Abhängigkeit von der aktuellen Temperatur des Kraftstoffes in der Vorlaufleitung eine Zumischung von erwärmtem Kraftstoff aus der Rücklaufleitung in die Vorlaufleitung gestattet ist, wird die gestellte Aufgabe dadurch gelöst, dass in das Vorwärm- oder Kombiventil ein tankseitig die Vorlauf- und Rücklaufleitung verbindender Bypass mit einem zur Rücklaufleitung hin öffnenden Druckventil zur Verhinderung eines zu hohen Vorlauf- und/oder Rücklauf-Druckes integriert ist.

Dadurch, dass der Bypass samt Druckventil in besagtes Vorwärm- oder Kombiventil integriert ist, sind im Hinblick auf den Stand der Technik zunächst ein verringerter Aufwand und ein verringerter Platzbedarf zu verzeichnen. Des Weiteren sind keine grundsätzlichen kostenaufwendigen Veränderungen an der Kraftstoff-Einspritzvorrichtung an sich erforderlich. Ein derartiges besonders ausgebildetes Vorwärm- oder Kombiventil lässt sich äußerst einfach in bestehende Kraftstoffversorgungssysteme nachrüsten bzw. herkömmliche Vorwärm- oder Kombiventile lassen sich gegen das erfindungsgemäße austauschen.

Die Unteransprüche beschreiben bevorzugte Weiterbildungen oder Ausgestaltungen der Erfindung.

Danach ist in zweckmäßiger Ausgestaltung der Erfindung das Druckventil durch ein federbelastetes Kugel- oder Kegelventil gebildet. Wie die Erfindung weiter vorsieht, umfasst das Vorwärm- oder Kombiventil des in Rede stehenden Kraftstoffversorgungssystems neben besagtem Bypass des Weiteren eine erste und eine zweite axial benachbarte Kammer, wobei die erste Kammer als Mischkammer in die Vorlaufleitung eingebunden ist und die zweite Kammer in die Rücklaufleitung eingebunden ist sowie einen federbelasteten und gegen die Federkraft mittels eines Antriebes axial verschiebbaren Schaltkolben aufweist, der seinerseits derart betätigbar respektive ansteuerbar ist, dass in Abhängigkeit von der Temperatur des Kraftstoffes in der Vorlaufleitung die Zumischung von Kraftstoff aus der Rücklaufleitung in die Vorlaufleitung durch einen die erste und zweite Kammer verbindenden Überstromkanal hindurch gestattet ist.

Das Vorwärm- oder Kombiventil weist hierbei zumindest drei Schaltstellungen auf, wobei
- eine erste Schaltstellung sich durch eine vollständige Beimischung des von der Rücklaufleitung in das Vorwärm- oder Kombiventil eingespeisten Kraftstoffvolumens in die Vorlaufleitung - Schaltstellung "Vorlauf-kalt" -,
- eine zweite Schaltstellung sich durch Beimischung eines Teilvolumens des von der Rücklaufleitung in das Vorwärm- oder Kombiventil eingespeisten Kraftstoffvolumens in die Vorlaufleitung - Schaltstellung "mischen" -, und
- eine dritte Schaltstellung sich durch eine vollständige Absperrung des Überstromkanals und somit Verhinderung der Beimischung von Kraftstoff aus der Rücklaufleitung in die Vorlaufleitung - Schaltstellung "Vorlauf-warm" -
auszeichnet.

Vorteilhaft ist, dass in der zweiten Schaltstellung zumischbare Teilvolumen variabel einstellbar sind. Diesem Umstand trägt insbesondere ein Antrieb für den Schaltkolben Rechnung, der durch ein auf Temperaturänderungen ansprechendes Dehnstoffelement gebildet ist, welches seinerseits in der ersten, in die Vorlaufleitung eingebundenen Kammer des Vorwärm- oder Kombiventils angeordnet und abgestützt ist. Im Wesentlichen bedeutet dies, dass eine stufenlose Verstellung des Schaltkolbens durch besagtes Dehnstoffelement in Abhängigkeit von der aktuellen Temperatur des Kraftstoffes in der Vorlaufleitung realisiert ist. Demgegenüber kann der Antrieb auch durch einen thermostatgesteuerten elektromechanischen Antrieb gebildet sein.

Die Erfindung wird nachstehend anhand eines in den Zeichnungen schematisch dargestellten Ausführungsbeispieles näher erläutert. Es zeigen:
- Fig. 1: eine Kraftstoff-Vorwärmvorrichtung mit einem erfindungsgemäß ausgebildeten Vorwärmventil,
- Fig. 2: das Vorwärmventil in einer ersten Schaltstellung ("Vorlauf-kalt") gezeigt,
- Fig. 3: das Vorwärmventil in einer zweiten Schaltstellung ("mischen") gezeigt, und
- Fig. 4: das Vorwärmventil in einer dritten Schaltstellung ("Vorlauf-warm") gezeigt.

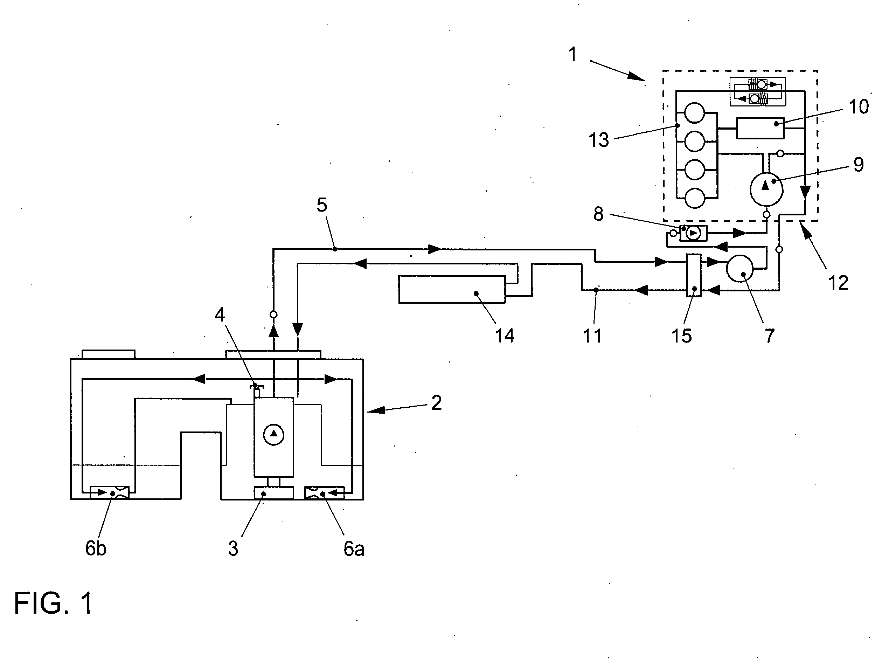

Gemäß Fig. 1 umfasst die Kraftstoff-Vorwärmvorrichtung für einen Diesel-Verbrennungsmotor 1 zunächst eine in einem Tank 2 angeordnete elektrisch betriebene Kraftstoffpumpe 3 mit einem Druckbegrenzungsventil 4, welches seinerseits den Vordruck in der Vorlaufleitung 5 begrenzt, der bei etwa 1,8 bar liegt. Ferner sind eine Saugstrahlpumpe 6a in der Hauptkammer und eine Saugstrahlpumpe 6b in der Nebenkammer des Tanks 2 gezeigt.

Der Kraftstoff wird über die Vorlaufleitung 5 sowie über einen in dieselbe eingebundenen Kraftstofffilter 7 einer so genannten Inline-Elektrokraftstoffpumpe 8 zugeführt, die ihrerseits den Kraftstoff auf einen Druck von etwa 5 bar verdichtet und eine am Diesel-Verbrennungsmotor 1 verbaute Hochdruck-Kraftstoffpumpe 9 mit demselben versorgt.

Ein zur sicheren Funktion, Schmierung und Kühlung benötigter Kraftstoff aus der Hochdruck-Kraftstoffpumpe 9 und aus dem Druckregelventil 10, welches am Rail verbaut ist, und aus der Leckageleitung 13, die das aus dem Einspritzprozess resultierende Lecköl ableiten, wird in einer gemeinsamen Rücklaufleitung 11 zusammengefasst.

Aufgrund der Verdichtung des Kraftstoffes innerhalb der Inline-Elektrokraftstoffpumpe 8 und der Führung desselben zum und durch die Hochdruck-Kraftstoffpumpe 9 sowie durch das Einspritzsystem 12 ist eine Erwärmung des überschüssigen Kraftstoffes respektive Dieselöls sowie des Lecköls zu verzeichnen.

Die Rücklaufleitung 11 ist ihrerseits mit dem Tank 2 verbunden, wobei wie vorliegend gezeigt, vorzugsweise in dieselbe ein an sich bekannter separater Kühler 14 eingebunden ist.

Wie der Fig. 1 weiter zu entnehmen ist, ist ferner ein Vorwärmventil 15 vorgesehen, welches sowohl in die Vorlaufleitung 5 als auch in die Rücklaufleitung 11 eingebunden und derart schaltbar ist, dass in Abhängigkeit von der aktuellen Temperatur des Kraftstoffes in der Vorlaufleitung 5 eine Zumischung von erwärmtem Kraftstoff aus der Rücklaufleitung 11 in die Vorlaufleitung 5 gestattet ist.

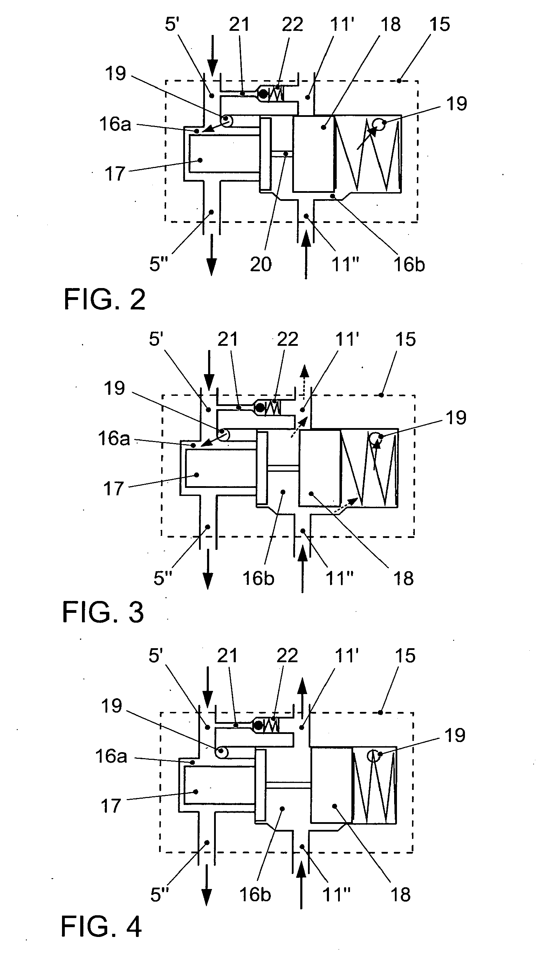

Gemäß den Fig. 2 bis 3 umfasst das vorliegend gezeigte Vorwärmventil 15 eine erste und eine zweite axial benachbarte Kammer 16a, 16b, wobei die erste Kammer 16a als Mischkammer ausgebildet und über einen tankseitigen sowie einen motorseitigen Anschluss 5', 5" in die Vorlaufleitung 5 eingebunden ist.

Die zweite Kammer 16b ist ihrerseits ebenfalls mittels eines tank- und motorseitigen Anschlusses 11', 11" in die Rücklaufleitung 11 eingebunden und weist einen federbelasteten und gegen die Federkraft mittels eines Antriebes 17 axial verschiebbaren Schaltkolben 18 auf.

Der Schaltkolben 18 ist nunmehr mittels des Antriebes 17 derart betätigbar respektive ansteuerbar, dass dieser, wie oben bereits ausgeführt, in Abhängigkeit von der Temperatur des Kraftstoffes in der Vorlaufleitung 5 die Zumischung von Kraftstoff aus der Rücklaufleitung 11 in die Vorlaufleitung 5 durch einen die erste Kammer 16a mit der zweiten Kammer 16b verbindenden Überstromkanal 19 hindurch gestattet.

Als besonders zweckmäßig hat sich als Antrieb 17 für den Schaltkolben 18 ein an sich bekanntes und demgemäß im Detail nicht näher dargestelltes, auf Temperaturänderungen ansprechendes Dehnstoffelement erwiesen, welches vorzugsweise durch einen mit Wachs oder Gas gefüllten Dehnkörper gebildet ist.

Besagter Antrieb 17 bzw. Dehnkörper ist innerhalb der als Mischkammer ausgebildeten ersten Kammer 16a des Vorwärmventils 15, sich an derselben abstützend, angeordnet und somit vom innerhalb der Vorlaufleitung 5 strömenden Kraftstoff umspült. Der Dehnkörper ist ferner über eine Kolbenstange 20 mit dem Schaltkolben 18 wirkverbunden.

Die Erfindung beschränkt sich jedoch nicht auf einen Antrieb 17 in Form eines Dehnstoffelementes, sondern erfasst jedweden geeigneten Antrieb 17, beispielsweise auch einen elektromechanischen Antrieb 17, der seinerseits über eine Steuereinheit von einem separaten, in der Vorlaufleitung 5 angeordneten Temperatursensor angesteuert wird (nicht näher dargestellt).

Gemäß Fig. 2 befindet sich das Vorwärmventil 15 in einer ersten Schaltstellung ("Vorlauf-kalt"), die sich ihrerseits dadurch auszeichnet, dass eine vollständige Beimischung des von der Rücklaufleitung 11 in das Vorwärmventil 15 bzw. in dessen zweite Kammer 16b eingespeisten warmen Kraftstoffvolumens in die Vorlaufleitung 5 bzw. die erste Kammer 16a des Vorwärmventils 15 durch den Überstromkanal 19 hindurch zu verzeichnen ist.

Im Wesentlichen ist hierbei der Schaltkolben 18 mittels des Antriebs 17 / Dehnstoffelementes derart axial eingestellt bzw. verschoben, dass der motorseitige Anschluss 11 " der Rücklaufleitung 11 an die zweite Kammer 16b des Vorwärmventils 15 offen und der tankseitige Anschluss 11' gesperrt sind, so dass gewährleistet ist, dass der erwärmte Kraftstoff durch den Überstromkanal 19 hindurch in die erste Kammer 16a strömen und sich mit dem Kraftstoff der Vorlaufleitung 5 vermischen kann.

Aufgrund vorstehender Mischung des aus dem Tank 2 abgezogenen "kalten" Kraftstoffes mit dem erwärmten Kraftstoff der Rücklaufleitung 11 und Erwärmung des Antriebes 17 in Form des Dehnstoffelementes dehnt sich dasselbe aus. Dieser Umstand führt dazu, dass der tankseitige Anschluss 11' der Rücklaufleitung 11 an die zweite Kammer 16b des Vorwärmventils 15 geöffnet wird und somit ein Teilvolumen des erwärmten Kraftstoffes nach wie vor durch den Überstromkanal 19 hindurch der Vorlaufleitung 5 zugeführt wird, wogegen das Restvolumen des Kraftstoffes dem Tank 2 zugeführt wird - Schaltstellung "mischen"- (Fig. 3). Vorliegend erfährt besagtes Restvolumen des Kraftstoffes noch eine Kühlung, indem dasselbe durch den Kühler 14 geführt wird, bevor es den Tank 2 erreicht (Fig. 1).

Ist eine bestimmte erhöhte Temperatur des Kraftstoffes in der Kammer 16a bzw. der Vorlaufleitung 5 erreicht, hat sich gemäß Fig. 4 der Schaltkolben 18 infolge weiterer Ausdehnung des Dehnstoffelementes derart weit axial fortbewegt, dass nunmehr der tank- und motorseitige Anschluss 11', 11" der Rücklaufleitung 11 an die Kammer 16b des Vorwärmventils 15 vollständig freigegeben sind, jedoch der Zufluss zum Überstromkanal 19 gesperrt ist. Eine Beimischung von erwärmtem Kraftstoff aus der Rücklaufleitung 11 in die Vorlaufleitung 5 ist demgemäß verhindert. Der erwärmte Kraftstoff strömt über den Kühler 14 direkt zum Tank 2 (Schaltstellung "Vorlauf-warm").

Für den Fachmann sicherlich leicht nachvollziehbar, ist die zweite Schaltstellung "mischen" aufgrund des verwendeten Antriebs 17 in Form des Dehnstoffelementes variabel, da dasselbe sich weitestgehend stufenlos ausdehnt und den Schaltkolben 18 axial in die eine oder andere Richtung verschiebt.

Aufgrund des Umstandes, dass insbesondere bei vollständiger Absperrung des tankseitigen Anschlusses 11' der Rücklaufleitung 11 an die Kammer 16b des Vorwärmventils 15 (Schaltstellung "Vorlauf-kalt" gemäß Fig. 2) es zu einer Druckerhöhung in der Vorlaufleitung 5 und/oder Rücklaufleitung 11 kommen kann und die Einhaltung der vom Hersteller des Einspritzsystems 12 vorgegebenen Druckwerte für die einwandfreie Funktion des Einspritzsystem 12 jedoch zwingend erforderlich ist, ist gemäß den Fig. 2 bis 4 in das Vorwärmventil 15 ein tankseitig die Vorlauf- und Rücklaufleitung 5, 11 bzw. deren Anschlüsse 5', 11' verbindender Bypass 21 mit einem zur Rücklaufleitung 11 bzw. zum tankseitigen Anschluss 11' derselben öffnenden Druckventil 22 integriert, wodurch erhöhter Druck in der Vorlauf- und/oder Rücklaufleitung 5, 11 der Hochdruck-Kraftstoffpumpe 9 vermieden wird. Vorwärmventil 15 und Bypass 21 samt Druckventil 22 bilden somit eine Baueinheit.

In der einfachsten und kostengünstigsten Variante ist das Druckventil 22 wie vorliegend durch ein federbelastetes Kugelventil gebildet, wobei die Federkraft derart eingestellt ist, dass bei Überschreiten eines Maximaldruckes in der Vorlaufleitung 5 das Druckventil 22 öffnet und der Überdruck zum Tank 2 abströmt. Sicherlich sind auch andere gleichwirkende Ventile, wie beispielsweise federbelastete Kegelventile denkbar und demgemäß durch die Erfindung mit erfasst.

Das vorstehende Ausführungsbeispiel stellt im Wesentlichen auf ein Vorwärmventil 15 ab. Durch die Erfindung mit erfasst ist jedoch auch ein bereits einleitend näher erläutertes und etwaig zur Anwendung kommendes Kombiventil 15, welches erfindungsgemäß integral einen Bypass 21 mit Druckventil 22 aufweist und zum einen bedarfsgerecht die Kraftstoffzuführung vom Tank 2 zum Diesel-Verbrennungsmotor 1 sowie den Kraftstoffrücklauf steuert und zum anderen eine schnelle Erwärmung des Kraftstoffes in der Kaltstartphase des Diesel-Verbrennungsmotors 1 sowie bei warmem Diesel-Verbrennungsmotor 1 eine Kühlung des rücklaufenden Kraftstoffes gewährleistet.

## Patentansprüche

1. Kraftstoff-Vorwärmvorrichtung für einen Diesel-Verbrennungsmotor (1) mit einer in einem Tank (2) angeordneten Kraftstoffpumpe (3), die ihrerseits den Kraftstoff über eine Vorlaufleitung (5) mit Kraftstofffilter (7) zu einer ein Einspritzsystem (12) des Diesel-Verbrennungsmotors (1) mit Kraftstoff versorgenden Hochdruck-Kraftstoffpumpe (9) fördert, wobei überschüssiger Kraftstoff, vom Einspritzsystem (12) kommend, über eine Rücklaufleitung (11) zum Tank (2) zurückgeführt wird, und wobei ein Vorwärm- oder Kombiventil (15) vorgesehen ist, welches sowohl in die Vorlaufleitung (5) als auch in die Rücklaufleitung (11) eingebunden und derart schaltbar ist, dass in Abhängigkeit von der aktuellen Temperatur des Kraftstoffes in der Vorlaufleitung (5) eine Zumischung von erwärmtem Kraftstoff aus der Rücklaufleitung (11) in die Vorlaufleitung (5) gestattet ist, **dadurch gekennzeichnet, dass** in das Vorwärm- oder Kombiventil (15) ein tankseitig die Vorlauf- und Rücklaufleitung (5, 11) verbindender Bypass (21) mit einem zur Rücklaufleitung (11) hin öffnenden Druckventil (22) zur Verhinderung eines zu hohen Vorlauf- und/oder Rücklauf-Druckes integriert ist.

2. Kraftstoff-Vorwärmvorrichtung nach Anspruch 1, **dadurch gekennzeichnet, dass** das Druckventil (22) durch ein federbelastetes Kugel- oder Kegelventil gebildet ist.

3. Kraftstoff-Vorwärmvorrichtung nach Anspruch 1, **dadurch gekennzeichnet, dass** das Vorwärm- oder Kombiventil (15) eine erste und eine zweite axial benachbarte Kammer (16a, 16b) umfasst, wobei die erste Kammer (16a) als Mischkammer in die Vorlaufleitung (5) eingebunden ist und die zweite Kammer (16b) in die Rücklaufleitung (11) eingebunden ist sowie einen federbelasteten und gegen die Federkraft mittels eines Antriebes (17) axial verschiebbaren Schaltkolben (18) aufweist, der seinerseits derart betätigbar respektive ansteuerbar ist, dass in Abhängigkeit von der Temperatur des Kraftstoffes in der Vorlaufleitung (5) die Zumischung von Kraftstoff aus der Rücklaufleitung (11) in die Vorlaufleitung (5) durch einen die erste und zweite Kammer (16a, 16b) verbindenden Überstromkanal (19) hindurch gestattet ist.

4. Kraftstoff-Vorwärmvorrichtung nach einem der Ansprüche 1 bis 3, **dadurch gekennzeichnet, dass** das Vorwärm- oder Kombiventil (15) zumindest drei Schaltstellungen aufweist, wobei
- eine erste Schaltstellung sich durch eine vollständige Beimischung des von der Rücklaufleitung (11) in das Vorwärm- oder Kombiventil (15) eingespeisten Kraftstoffvolumens in die Vorlaufleitung (5) - Schaltstellung "Vorlauf-kalt" -,
- eine zweite Schaltstellung sich durch Beimischung eines Teilvolumens des von der Rücklaufleitung (11) in das Vorwärm- oder Kombiventil (15) eingespeisten Kraftstoffvolumens in die Vorlaufleitung (5) - Schaltstellung "mischen" -, und
- eine dritte Schaltstellung sich durch eine vollständige Absperrung des Überstromkanals (19) und somit Verhinderung der Beimischung von Kraftstoff aus der Rücklaufleitung (11) in die Vorlaufleitung (5) - Schaltstellung "Vorlauf-warm" -
auszeichnet.

5. Kraftstoff-Vorwärmvorrichtung nach Anspruch 4, **dadurch gekennzeichnet, dass** das in der zweiten Schaltstellung zumischbare Teilvolumen variabel einstellbar ist.

6. Kraftstoff-Vorwärmvorrichtung nach einem der Ansprüche 3 bis 5, **dadurch gekennzeichnet, dass** der Antrieb (17) für den Schaltkolben (18) durch ein auf Temperaturänderungen ansprechendes Dehnstoffelement, welches seinerseits in der ersten, in die Vorlaufleitung (5) eingebundenen Kammer (16a) des Vorwärm- oder Kombiventils (15) angeordnet und abgestützt ist, oder durch einen thermostatgesteuerten elektromechanischen Antrieb (17) gebildet ist.
